# EUROPÄISCHE PATENTSCHRIFT

(11) **EP 3 996 172 B1**
(45) Veröffentlichungstag und Bekanntmachung des Hinweises auf die Patenterteilung: **14.10.2026**
(21) Anmeldenummer: 21206514.8
(22) Anmeldetag: 04.11.2021
(51) Int. Cl.: H01M 4/525, H01M 10/04, H01M 10/0525, H01M 10/42, H01M 50/102, H01M 10/44

(54) **ELEKTROCHEMISCHE BATTERIE**
ELECTROCHEMICAL BATTERY
BATTERIE ÉLECTROCHIMIQUE

(30) Priorität: 09.11.2020 DE 102020214053
(43) Veröffentlichungstag der Anmeldung: 11.05.2022
(73) Patentinhaber: PowerCo SE, 38239 Salzgitter (DE)
(72) Erfinder: GLAVAS, Vedran, 38440 Wolfsburg (DE); KOOPMANN, Julian, 38106 Braunschweig (DE); MUELLER, Jonathan, 38518 Gifhorn (DE); OLOUOU GUIFO, Stéphane Brice, 38442 Wolfsburg (DE); WEGENER, Julian, 38442 Wolfsburg (DE); WIETHOP, Marco, 38302 Wolfenbüttel (DE)
(74) Vertreter: FDST Patentanwälte

(56) Entgegenhaltungen:
- DE-A1- 102018 204 220
- US-A- 5 786 980
- US-A- 6 040 085
- US-B1- 6 558 438

## Beschreibung

Die Erfindung betrifft eine elektrochemische Batterie, insbesondere für ein Kraftfahrzeug, aufweisend ein Batteriegehäuse und mindestens eine darin aufgenommene elektrochemische Batteriezelle mit mindestens einer Kathodenschicht. Die Erfindung betrifft weiterhin ein Verfahren zum Betrieb einer solchen Batterie.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung der Betriebsspannung weisen solche Fahrzeugbatterien typischerweise ein Batteriegehäuse mit mindestens einer darin aufgenommenen Batteriezelle auf.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyt (Flüssigelektrolyt) durchdrungen, welcher eine ionenleitfähige Verbindung der Bestandteile beziehungsweise einen Ladungsausgleich erzeugt.

Als Aktivmaterial der Kathodenschicht ist es beispielsweise möglich, nickelreiche schichtartige Kathodenmaterialien für Lithium-Ionen-Batterien, beispielsweise Lithium-Nickeldioxid mit der chemischen Formel LiNiO₂, einzusetzen, welche eine relativ hohe Energiedichte bei geringen Herstellungskosten aufweisen. Im Batteriebetrieb treten hierbei jedoch Redoxprozesse (Reduktions-Oxidations-Prozesse) in der Batteriezelle auf, welche Alterungsmechanismen bewirken, welche das Kathodenmaterial altern. Je nach Temperatur und Druck in der Batteriezelle können diese Alterungsprozesse auch ohne einen Betrieb der Batterie spontan ablaufen.

So tritt beispielsweise eine thermochemisch betriebene und ständige Wanderung von Nickel auf die Lithium-Ebene während der sogenannten Delithiierung auf. Dies bedeutet, dass während des Ladeprozesses Sauerstoff (O) reduziert wird, wodurch es zu einer Gasbildung von molekularem Sauerstoff (O₂) sowie zur Bildung von Lithium-Oxiden mit der Zusammensetzung Li₂O kommt. Bei einem hohen Anteil von Nickel in der Lithium-Ebene, kann die schichtartige Struktur mit der Raumgruppe R-3m in eine steinsalzige, kubische Li₁₋ₓNi₁₊ₓO₂-Struktur (mit x bis 0,4) mit der Raumgruppe Fm-3m übergehen. Aufgrund einer höheren Oberflächenaktivität, sind diese voneinander abhängigen Prozesse vorwiegend an Kathodenoberfläche festzustellen.

Für Anwendungen in Fahrzeugbatterien führt dies dazu, dass nickelbereicherte Kathodenmaterialien einerseits zwar zu einer längeren Reichweite führen, jedoch andererseits eine verkürzte Lebensdauer sowie eine geringe Sicherheit aufweisen. Insbesondere im Bereich der Elektromobilität, wo besonders hohe Reichweiten bei ausreichender Lebensdauer und hoher Sicherheit erzielt werden müssen, zeigt die Notwendigkeit, die Stabilität nickelreicher Kathodenmaterialien ohne starke Reduzierung ihrer Energiedichte zu optimieren.

Zur Erhöhung der Stabilität und somit der Lebensdauer und Sicherheit von Batterien werden Li-NiO₂-Kathodenmaterialien meistens chemisch, insbesondere mittels Dotierung und/oder Beschichtung mit verschiedenen Übergangsmetallen wie zum Beispiel Kobalt (Co), Mangan (Mn), oder Wolfram (W), sowie morphologisch, insbesondere über mikroskalige Primär- und Sekundärpartikel und/oder Korngrenzengeometrie, verändert. Zusätzlich oder alternativ zu der strukturellen Optimierung von LiNiO₂ können die Lade- und Entladeprozesse so geregelt werden, dass Lebensdauer und Sicherheit weniger gefährdet werden. Dies erfolgt durch geringere Ladespannungen, geringere C-Raten sowie durch ein Thermomanagement (Wärmeabfuhr, d.h. Energieverluste). Unter einer C-Rate ist hierbei insbesondere ein Lade- (oder Entladestrom) der Batterie, bezogen auf ihre Kapazität (C) zu verstehen.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Eine Veränderung der chemischen Zusammensetzung von LiNiO₂-Kathodenmaterialien sowie eine Mikro- und Nanostrukturierung führt stets zur Reduzierung der theoretischen Kapazität sowie des elektrochemischen Potentials und somit zu einer Reduzierung der Energiedichte der Batteriezelle. So weisen beispielsweise Kathodenschichten aus Li(NiₓCo_{y}Mn_{z})O₂, sogenannte NMC-Kathoden, eine höhere elektrochemische und thermische Stabilität als LiNiO₂ auf. Obwohl NMC-Kathoden nach einer langen Nutzungszeit daher eine höhere nutzbare Entladekapazität im Vergleich zu LiNiO₂-Kathoden aufweisen, weisen sie in den ersten (Lade-/Entlade-)Zyklen allerdings eine geringere Entladekapazität auf. Die Mikrostrukturmodifikation ermöglicht eine einfachere Grenzflächendiffusion von Lithium-Ionen und somit mehr Kapazität in kurzen Zeitintervallen im Vergleich zu Masse- oder Bulk-LiNiO₂. Nachteilhaft sind hier die verstärkten irreversiblen Grenzflächenprozesse (O₂-Gasbildung, Phasenübergang von der schichtartigen auf lokale kubische, elektrochemisch inaktive steinsalzige Phasen). Des Weiteren sind aufwändigere, bisher nicht standardisierte Herstellungsverfahren sowie höhere Herstellungskosten für komplex-dotierte, beschichtete und mikroskalige Strukturen vor allem für industrielle Zwecke zu berücksichtigen. Von der Prozessoptimierung her, wird die erreichbare elektrochemische Energiesowie Leistungsdichte zugunsten der thermochemischen Stabilität bei der Reduzierung von Ladespannungen, von C-Raten sowie von Temperaturen, reduziert.

Die vorstehend beschriebenen Lösungen (Dotierung, Beschichtung, Mikrostrukturierung) sind beispielsweise auch miteinander kombinierbar. Beispielsweise lassen sich mangan- und kobaltdotierte LNO-Partikel beschichten sowie auf der Mikroskala gezielt so ausrichten, dass eine sowohl lokal als auch global maximale Lithium-Diffusivität und somit eine hohe Performance und Energiedichte erreicht werden kann. Die Lade- und Entladeprozesse können ferner bei begrenzten C-Raten und Temperaturen erfolgen. Somit gibt es die Möglichkeit, einen Kompromiss zwischen Lebensdauer, Reichweite und Performance zu finden.

In der US 6 558 438 B1 ist ein Verfahren zur Herstellung einer folienverpackten Batterie beschrieben. Die folienverpackte Batterie weist eine mit einer Folie verpackte Batterieenergiequelle auf, die mindestens eine Kathode, eine Anode, einen Elektrolyten und einen Separator umfasst. Verfahrensgemäß ist ein Vorladeschritt zum Aufladen der folienverpackte Batterie vorgesehen, bei welchem ein Druck auf die folienverpackte Batterie ausgeübt wird, beispielsweise durch Einklemmen zwischen zwei flachen Platten.

Aus der US 6 040 085 A ist eine Vorrichtung und ein Verfahren zur Kompression einer elektrochemischen Zelle unabhängig vom Atmosphärendruck bekannt. Hierbei ist eine Lithium-Ionen-Zellenanordnung von einer Materialschicht unter Spannung derart umgeben, dass das Material einen Druck ausübt, der die Zelle komprimiert, um den Kontakt zwischen der Anoden-, Separator- und Kathodenschicht zu verbessern. Alternativ zu der Materialschicht ist auch eine abgedichtete Verpackung möglich, welche sowohl die Batterie als auch ein Federelement enthält. Das Federelement in der Verpackung übt Druck auf die Batterie aus, um sie zusammenzudrücken und den Kontakt zwischen den Anoden-, Separator- und Kathodenschichten zu verbessern.

Der Erfindung liegt die Aufgabe zugrunde, ein besonders geeignetes Verfahren zum Betrieb einer elektrochemischen Batterie anzugeben. Insbesondere soll eine einfache und effektive Nutzung von reinem Lithium-Nickeldioxid als Kathodenmaterial ermöglicht sein.

Die Aufgabe wird mit den Merkmalen des Anspruchs 1 erfindungsgemäß gelöst. Vorteilhafte Ausgestaltungen und Weiterbildungen sind Gegenstand der jeweiligen Unteransprüche. Die im Hinblick auf die Batterie angeführten Vorteile und Ausgestaltungen sind sinngemäß auch auf das Verfahren übertragbar und umgekehrt.

Die Erfindung geht von der Erkenntnis aus, dass sich eine Nutzung von reinem Lithium-Nickeldioxid (LiNiO₂) als Kathodenmaterial für Hochenergie- und Hochleistungsanwendungen durch eine Umkehrung der elektrothermochemisch bedingten Alterungsmechanismen verwirklichen lässt. Da diese Mechanismen bei konstanten thermodynamischen Bedingungen (Temperatur, Druck, Ladezustand) irreversibel sind, muss mindestens eine dieser drei Zustandsvariablen entweder während oder nach den Alterungsmechanismen verändert werden, sodass deren Gradienten die Selbstheilung antreibt. Ab-initio Simulationen basierend auf der Quantenmechanik (Dichtefunktionaltheorie, DFT) haben ergeben, dass LiNiO₂-Bulk, also Volumen LiNiO₂, besonders bei tiefen Temperaturen stets stabiler ist, als ein System mit den Reaktionsprodukten (Li₁₋ₓNi₁₊ₓO, Li₂O, O₂). Lediglich wenn der Kathodenoberflächenanteil hoch genug ist, können die Reaktionsprodukte aufgrund der sehr hohen Oberflächenstabilität von Li₂Ostabiler werden, sodass die Alterungsreaktionen auch während einer Batterieladung (Delithiierung) exotherm ablaufen.

Im Falle eines vernachlässigbaren Einfluss von Oberflächen auf die Energiebilanz, ist also metallisches Lithium in der Kathode zum Beispiel als Dendriten notwendig, damit die Alterungsreaktionen ablaufen. Mit Hilfe eines elektrischen Generators zum Aufladen der Batteriezelle gelangt nur ein Teil der Lithium-Ionen zusammen mit den Elektronen aus den Übergangsmetallen (Ni³⁺ auf Ni⁴⁺) in die Anode bei hohen C-Raten, während manche Lithium-Ionen und Elektronen die Kathode nicht rechtzeitig verlassen, sodass sich Lithium-Metall an Oberflächen und Grenzflächen bildet. Die Kathode wird durch die erzeugte ohmsche Dissipationswärme bei der Bildung von Lithium-Metall erwärmt. An der Oberfläche binden sich Sauerstoff und Lithium und bilden stabilere Li₂O-Oberflächen, während andere Sauerstoff-Atome (O) zur Gasbildung beitragen. Der gasförmige, erwärmte (molekulare) Sauerstoff (O₂) geht aufgrund von Auftriebskräften sowie von fluiddynamischen Bedingungen mit dem Elektrolyt und den anderen Zellkomponenten verloren.

Der Sauerstoffverlust ist einer der wichtigsten Gründe für die Irreversibilität der Reaktionen. Erfindungsgemäß ist somit eine Erhöhung des statischen Innendrucks der Batteriezelle vorgesehen, welche den Gasdruck erhöht. Der erzeugte Druck auf die Batteriezelle resultiert in erhöhten mechanischen Druckspannungen innerhalb der Kathode, wodurch Sauerstoffmoleküle (O₂) aufgrund ihres dabei reduziertem Volumen öfter auf die gealterten LNO-Oberflächen treffen. Idealerweise soll die während der Alterung dissipierte Wärmeenergie im System bleiben, d.h. die Alterungsprozesse sollten adiabatisch und nicht isotherm mit Wärmeabfuhr ablaufen. Bei Anlegen einer Druckspannung steigt das chemische Potential von O₂, während sein Volumen reduziert wird. Mit der bereits hohen adiabatischen Temperatur (führt zu schnelleren Reaktionsraten), dem höheren hydrostatischen Druck (führt zur einer höheren Molekülstoßfrequenz und somit zu schnelleren Reaktionen) und das erhöhte Energieniveau der Alterungsprodukte (führt zu einer spontanen Reaktion) können die Alterungsreaktionen umgekehrt ablaufen, sodass sich LiNiO₂ aus NiO, Li₂Ound O₂ wieder bildet, und eine Selbstheilung der Kathodenschicht bewirkt wird.

Die elektrochemische Batterie ist beispielsweise Teil einer Fahrzeugbatterie eines Kraftfahrzeugs, insbesondere eines elektrisch angetriebenen oder antreibbaren Kraftfahrzeugs, beispielsweise eines Elektro- oder Hybridfahrzeugs. Die Batterie ist beispielsweise als ein Batteriemodul oder Batteriezellenmodul ausführbar. Die Batterie ist insbesondere als eine Lithium-Ionen-Batterie ausgebildet.

Die Batterie weist hierbei ein insbesondere druckdichtes Batteriegehäuse und mindestens eine darin aufgenommene (elektrochemische) Batteriezelle mit mindestens einer Kathodenschicht auf. Das Batteriegehäuse ist als ein beispielsweise zylindrischer, insbesondere kreiszylindrischer, Druckbehälter ausgeführt. Das Batteriegehäuse ist beispielsweise aus einem Aluminium- oder Stahlmaterial hergestellt.

Die Batteriezelle ist beispielsweise als eine zylindrische oder prismatische Zelle, oder als eine Pouch-Zelle ausgeführt. Die Batteriezelle ist beispielsweise als eine (Dünn-)Schichtzelle mit der Kathodenschicht und mit einer Anodenschicht sowie mit einer dazwischen angeordneten Separatorschicht ausgeführt.

Die Kathodenschicht weist reines Lithium-Nickeldioxid (LiNiO₂, LNO) als Aktivmaterial auf. Mit anderen Worten wird lediglich reines LiNiO₂ als Kathodenmaterial verwendet. Unter "reinem Lithium-Nickeldioxid" oder "reinem LiNiO₂" ist hier und im Folgenden insbesondere ein Lithium-Nickeldioxid mit einem hohen Reinheitsgrad, beispielsweise mindestens 95%, insbesondere mindestens 98%, vorzugsweise mindestens 99%, zu verstehen. Erfindungsgemäß ist weiterhin eine Druckeinrichtung vorgesehen, welche dazu geeignet und eingerichtet ist, bedarfsweise zumindest zeitweise einen erhöhten Druck auf Kathodenschicht zu erzeugen oder zu bewirken. Dies bedeutet, dass die Druckeinrichtung einen erhöhten Druck oder Überdruck erzeugt, welcher auf die Batteriezelle einwirkt, oder welcher zumindest zu einer Druckerhöhung in der Batteriezelle führt. Dadurch ist eine besonders geeignete Batterie realisiert, welche eine Selbstheilung der Kathodenschicht ermöglicht.

Im Vergleich zu den bisher eingesetzten Aktivmaterialien (z.B.: NMC, NCA, LFP, ...) besteht das Aktivmaterial mit selbstheilenden bzw. regenerierbaren Oberflächen aus reinem LiNiO₂. Bei der Herstellung lassen sich daher herkömmliche, standardisierte Verfahren anwenden. Dadurch dass reines LNO als Aktivmaterial benutzt werden kann, ergibt sich für die Batterie eine höhere Energiedichte, also eine längere Reichweite bei ständig regenerierbarer Lebensdauer.

Die Batterie weist somit technisch und wirtschaftlich kostengünstige sowie umweltfreundlichere Herstellungskosten auf, da reines LiNiO₂, also kobaltfrei und mit geringem CO₂-Ausstoß bei der Synthese, verwendet wird. Die Batterie weist eine höhere reversible Kapazität und somit Energiedichte im Vergleich zu dotierten und beschichteten Kathodenmaterialien auf, wobei durch die Selbstheilung eine ständig verlängerte Lebensdauer realisiert ist. Die Batterie weist weiterhin mit kleinen Mikropartikeln eine erhöhte C-Rate (Schnellladefähigkeit) aufgrund des höheren vorhandenen Oberflächenanteils für die Li-Interkalation und Deinterkalation auf.

Ein mechanischer Druck, welcher in Batterien üblicherweise angewandt wird, um den elektrischen Kontakt zwischen benachbarten Komponenten sicher zu stellen, hat keine Auswirkung auf anwesende Flüssigkeiten/Gase innerhalb des Batteriegehäuses, wodurch ein mechanischer Druck nicht zum gewünschten Heilungsmechanismus. Daher weist die Batterie in einer geeigneten Ausführung eine Druckeinrichtung auf, mittels welcher bedarfsweise zumindest zeitweise ein erhöhter hydraulischer Innendruck oder hydraulischer Überdruck innerhalb des Batteriegehäuses erzeugbar ist. Mit anderen Worten ist eine Druckeinrichtung zur temporären Druckerhöhung oder Druckaufbau innerhalb des Batteriegehäuseinneren vorgesehen. Ein solcher hydraulischer Druck kann den Heilungsmechanismus in der Kathodenschicht thermodynamisch und kinetisch vergünstigen.

Das Batteriegehäuse ist hierbei vorzugsweise derart dimensioniert, dass es durch das Anlegen eines hydraulischen Überdrucks den Regenerationsprozess der Elektroden, insbesondere der Kathode, der mindestens einen Batteriezelle unterstützt und gleichzeitig ein thermisches Durchgehen (engl.: thermal runaway) für eine vorgegebene Zeitdauer, beispielsweise fünf Minuten, sicher eindämmen kann.

In einer bevorzugten Ausführungsform ist der erhöhte Innendruck ein statischer Druck. Mit anderen Worten ist die Druckeinrichtung dazu vorgesehen und eingerichtet den statischen Druck im Inneren des Batteriegehäuses zu erhöhen. Vorzugsweise wird mittels der Druckeinrichtung ein hydrostatischer oder aerostatischer Überdruck erzeugt. Dadurch ist eine zuverlässige Unterstützung der Regenerations- oder Selbstheilungsprozesse realisierbar.

In einer denkbaren Ausgestaltung ist die mindestens eine Batteriezelle gehäuselos, also offen, ausgeführt. Dies bedeutet, dass das Schichtsystem der Batteriezelle, insbesondere die Kathodenschicht, frei innerhalb des Batteriegehäuses angeordnet ist. Es befindet sich also keine fluid- oder druckdichte Trennung im Batteriegehäuse. Dadurch wirkt ein erhöhter Innendruck oder Überdruck im Inneren des Batteriegehäuses direkt oder unmittelbar auf die Kathodenschicht.

Die erfindungsgemäße Druckerhöhung in der Batteriezelle wird mittels der Druckeinrichtung beispielsweise pneumatisch (Druckmembran oder Druckbeutel) oder hydraulisch mit einer Kolbenpumpe (Volumenänderung durch Einschieben eines Bolzens) oder piezoaktorisch oder mittels eines Aktors mit Formgedächtnislegierung (FGL-Aktor) oder eine Elektrolytpumpe bewirkt. Bei einer passiven Lösung zur Druckerzeugung wird keine äußere Energiezufuhr aus einer Pumpe benötigt. Darüber hinaus könnten Wartungskosten durch den geschlossenen Aufbau entfallen.

Die Druckeinrichtung weist in einer möglichen Weiterbildung insbesondere ein Ventil im Batteriegehäuse auf. Dies bedeutet, dass eine Gehäusewand des Batteriegehäuses von dem Ventil durchsetzt ist. Über das Ventil ist zur Erhöhung des Innendrucks ein Fluid, insbesondere ein Gas, in das Innere des Batteriegehäuses förderbar. Beispielsweise kann das Batteriegehäuse über das Ventil mit reinem Sauerstoff-Druck beaufschlagt werden, welcher dem Regenerationsprozess der Elektroden in einer integrierten (offenen zylindrischen) Batteriezelle direkt zur Verfügung steht. Alternativ kann das Batteriegehäuse beispielsweise mit reinem Stickstoff-Druck beaufschlagt werden, welcher den Druck in abgeschlossenen, innenliegenden Pouch-Zellen erhöht, und gleichzeitig als Brandschutzgas dient. Das Fluid wird hierbei beispielsweise aus einer anschließbaren Gasflasche über den Druck innerhalb der Gasflasche oder mittels einer Pumpe in das Batteriegehäuse gefördert. Die Gasflasche und/oder Pumpe sind beispielsweise in einer Ladesäule angeordnet, so dass nach einem Ladevorgang der Batterie der für die Selbstheilung notwendige Überdruck erzeugbar ist.

Ein zusätzlicher oder weiterer Aspekt der Erfindung sieht einen aufblasbaren Beutel der Druckeinrichtung vor, welcher innerhalb des Batteriegehäuses angeordnet ist. Der Beutel ist hierbei mit einem gasförmigen oder flüssigen Fluid als Arbeitsstoff befüllbar, wodurch sich dessen Volumen vergrößert oder ausdehnt. Mit Hilfe des vorher eingebauten oder integrierten (Luft-)Beutels in dem Batteriegehäuse, kann mittels einer Pumpe eine Umgebungsluft bis zu einem bestimmten Druck in den Beutel innerhalb des Batteriegehäuses gefördert werden. Dieser bläht sich auf, also vergrößert sein Volumen, wodurch das Rest-Volumen im Gehäuseinneren reduziert, und somit der Innendruck erhöht wird. Dies resultiert in einem hydraulischen oder pneumatischen Druck auf die Batteriezelle, sodass der Druck von Sauerstoff (O₂) durch die erzeugten mechanischen Druckspannungen innerhalb der Kathode ebenfalls erhöht wird.

Als technische Einrichtung zur temporären Erhöhung des Innendrucks auf die Batteriezelle kann ein Arbeitsstoff bevorzugt werden, dessen Aggregatzustand sich bei Wärmeentwicklung während eines Ladeprozesses von flüssig auf gasförmig verändern kann. Das begrenzte Volumen im Batteriegehäuse führt somit zu einer Erhöhung des Druckes des Arbeitsstoffes, welche die Regenerierungsprozesse in der Kathodenschicht aktiviert.

Alternativ wäre auch ein externer Verspannrahmen als Druckeinrichtung außerhalb der Batteriezellen möglich, welcher über Zugstäbe und Piezoaktoren die Zelle von außen temporär verspannen kann.

Das erfindungsgemäße Verfahren ist zum Betrieb einer vorstehend beschriebenen elektrochemischen Batterie vorgesehen, sowie dafür geeignet und ausgestaltet.

Verfahrensgemäß wird die Batterie in einem Ladevorgang mit elektrischer Energie auf einen vorgegebenen oder hinterlegten Ladezustand geladen oder entladen. Der Begriff "Ladevorgang" bezeichnet hier und im Folgenden insbesondere sowohl einen Aufladevorgang, bei welchem der Ladezustand erhöht wird, als auch einen Entladevorgang, bei welchem der Ladezustand erniedrigt oder reduziert wird. Der Ladezustand (state of charge, SoC) der Batterie bezeichnet die noch verfügbare Kapazität einer Batterie im Verhältnis zu deren Nominalwert. Der Ladezustand wird hierbei in der Regel in Prozent hinsichtlich eines voll aufgeladenen Zustands der Batterie angegeben. Mit anderen Worten bezeichnet ein Ladezustand von 100 % eine vollständig aufgeladene Batterie (Vollladezustand) und ein Ladezustand von 0 % eine vollständig entladene Batterie (Entladezustand). Im Vollladezustand befindet sich im Wesentlichen kein Lithium in der Kathode beziehungsweise Kathodenschicht, wobei im Entladezustand die Kathode beziehungsweise Kathodenschicht im Wesentlichen vollständig lithiert ist.

Nach dem (Ent-)Ladevorgang, also nachdem Li-Ionen wieder in die Kathode interkaliert sind, wird für eine vorgegebene Zeitdauer mittels der Druckeinrichtung ein erhöhter Druck auf die Batteriezelle, insbesondere über einen hydrostatischen oder aerostatischen Überdruck im Batteriegehäuse, erzeugt oder bewirkt.

Nach der Zeitdauern wird der Druck auf einen Normaldruck (Betriebsdruck) reduziert. Dies bedeutet, dass der Druck auf einen Druckwert reduziert wird, welcher vor oder während des (Ent-)Ladevorgangs vorhanden war. Der temporäre oder zeitweise Überdruck während der Zeitdauer unterstützt die Regenerations- und Selbstheilungsprozesse in der Kathodenschicht, so dass die Kathodenschicht am Ende des Verfahrens stöchiometrisch wieder reines Lithium-Nickeldioxid aufweist.

Je nach Kundenwunsch ist es beispielsweise möglich die Regenerierung lediglich bis zu einem bestimmten Punkt ablaufen zu lassen. Anschließend können Temperatur und Druck wieder auf die Standard- oder die Betriebsbedingungen durch Wärmabfuhr und mechanische Entspannung eingestellt werden. Falls die Materialien hohe Drücke nicht aushalten können, und die Sicherheit der gesamten Batterie sowie des elektrischen Fahrzeuges gefährdet wäre, können diese Recyclingprozesse ex-situ, d.h. nur mit dem Kathodenmodul ablaufen.

In einer geeigneten Ausführung des Verfahrens wird die Batterie beziehungsweise die mindestens eine Batteriezelle im Zuge des Ladevorgangs auf einen Ladezustand zwischen 30% und 15%, insbesondere zwischen 30% und 20%, vorzugsweise auf 20%, geladen. Mit anderen Worten wird die Batterie auf einen nicht vollständig (0%) entladenen Zustand geladen/entladen.

Zwar ist eine Heilungsreaktionsenergie bei einer vollständig entladenen Batterie, also bei 0% SoC, am günstigsten, jedoch treten bei Ladungszuständen unter ca. 15% weitere Alterungsmechanismen in der Kathodenschicht auf. Bevorzugterweise wird die Batterie beziehungsweise die mindestens eine Batteriezelle auf einen Ladezustand von 20% geladen, so dass eine möglichst günstige Heilungsreaktionsenergie vorliegt, jedoch ungewünschte Alterungsmechanismen vermieden werden.

In einer zweckmäßigen Weiterbildung wird die Kathodenschicht während der Zeitdauer, also während der Druckerhöhung, beispielsweise durch eine beim Entladen erzeugte Ohm'sche Dissipationsenergie oder mit einer externen Wärme durch Konduktion, erwärmt. Dadurch werden die Regenerations- und Selbstheilungsprozesse in der Kathodenschicht beschleunigt.

In einer vorteilhaften Ausführung wird die Kathodenschicht während der Zeitdauer auf eine Temperatur zwischen 50 °C (Grad Celsius) und 70 °C, insbesondere zwischen 55 °C und 65 °C, vorzugsweise auf 60 °C, erwärmt. Der Temperaturbereich ist hierbei an einen (Flüssig-)Elektrolyten sowie an den Separator oder die Separatorschicht der mindestens einen Batteriezelle angepasst. Dies bedeutet, dass in dem Temperaturbereich möglichst keine ungewünschten Reaktionen oder Phasenübergange des Elektrolyten und/oder Separators auftreten.

In einer bevorzugten Ausgestaltung wird die Erwärmung ohne zusätzliche Komponenten bewirkt, indem eine "leere" Batterieentladung ohne elektrische Arbeit ausgeführt wird, sodass Ohm'sche Widerstandswärme direkt und ausschließlich in der Kathodenschicht erzeugt wird.

Ist der Oberflächenanteil so hoch (d.h. kleinere Kathodenpartikel), dass LiNiO₂ spontan, also nicht nur während der Delithiierung gealtert wird, kann die Regenerierung ebenfalls auf die vorstehend beschriebene Art und Weise unter Druckspannung ablaufen. Reicht die Temperatur nicht, kann Wärme aus einer externen Wärmequelle erzeugt werden, falls die Batterie bereits entladen ist, und sich somit nicht elektrisch erwärmen kann.

Ein zusätzlicher oder weiterer Aspekt der Erfindung sieht vor, dass der Druck, insbesondere der hydrostatische Innendruck im Batteriegehäuse, zur Unterstützung des Regenerationsprozesses der Elektroden während der Zeitdauer auf maximal 25 bar, insbesondere auf einen Druckbereich zwischen 5 bar bis 10 bar, erhöht wird. Vorzugsweise wird der Druck auf maximal 10 bar erhöht. Dadurch ist ein besonders geeigneter Druck auf die Kathodenschicht ausgeübt, welcher die Selbstheilung und Regeneration des LiNiO₂ unterstützt.

In einer möglichen Weiterbildung wird die Druckeinrichtung zur Druckerhöhung mit einer externen Fördereinrichtung gekoppelt, welche im Betrieb ein Fluid in das Batteriegehäuse fördert. Beispielsweise ist zur Druckerzeugung eine beispielsweise mit dem Beutel verbundene stationäre Pumpe an einer Werkstatt vorgesehen, welche über das Ventil der Druckeinrichtung anschließbar ist. Insbesondere kann die Pumpe in einer Ladesäule oder einer speziell dafür ausgelegten externen Einheit angeordnet sein. Diese Pumpe wird mit dem Kraftfahrzeug verbunden und ist über ein Leitungssystem mit der Batterie beziehungsweise den dort enthaltenen Beuteln der Druckeinrichtung verbunden. Der Druck wird dann nach dem eigentlichen Ladevorgang aufgebracht und die Batterie somit geheilt. Somit entfällt ein Mitführen einer Vorrichtung/Pumpe im Kraftfahrzeug.

Nachfolgend sind Ausführungsbeispiele der Erfindung anhand einer Zeichnung näher erläutert. Darin zeigen:
- Fig. 1: in schematischer Darstellung eine elektrochemische Batterie mit einer Batteriezelle,
- Fig. 2 bis Fig. 6: in aufeinanderfolgenden Darstellungen die Alterungs- und Regenerationsprozesse in einer Kathodenschicht der Batteriezelle im Zuge eines erfindungsgemäßen Verfahrens,
- Fig. 7: ein Temperatur-Druck-Diagramm für einen kinetischen Gaswirkungsgrad in Bezug auf Standardbedingungen, und
- Fig. 8: ein Temperatur-Druck-Diagramm für einen gesamten Reaktionswirkungsgrad in Bezug auf Standardbedingungen für eine Aktivierungsenergie von 100 kJ/mol.

Einander entsprechende Teile und Größen sind in allen Figuren stets mit den gleichen Bezugszeichen versehen.

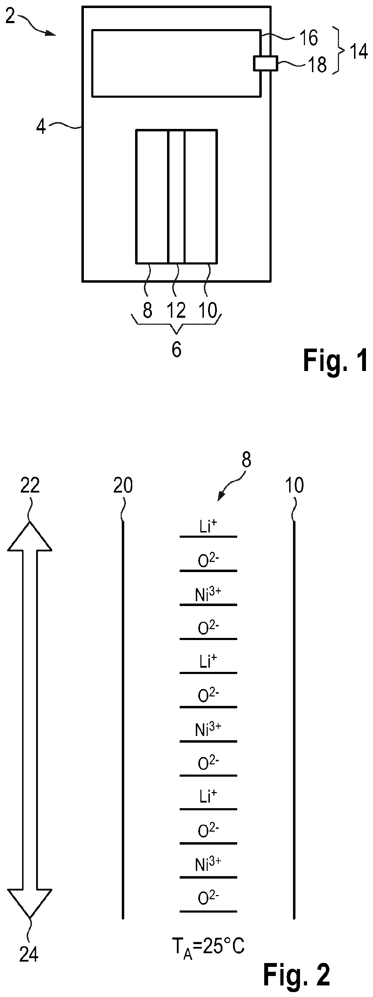

Die Fig. 1 zeigt eine elektrochemische Batterie 2 in einer schematischen und stark vereinfachten Darstellung. Die Batterie 2 weist ein druckdichtes Batteriegehäuse 4 auf, in welchem eine offene, also gehäuselose, Batteriezelle 6 aufgenommen ist. Die Batteriezelle 6 weist eine Kathodenschicht 8 und eine Anodenschicht 10 sowie eine dazwischen angeordnete Separatorschicht 12 auf. Die Batterie 2 weist eine Druckeinrichtung 14 mit einem aufblasbaren Beutel 16 und mit einem Ventil 18 auf. Über das Ventil 18 ist eine Pumpe oder eine Gasflasche an die Druckeinrichtung 14 anschließbar, mittels welcher der Beutel 16 aufblasbar ist. Der Beutel 16 erhöht im Zuge des Aufblasens einen hydraulischen Innendruck im Inneren des Batteriegehäuses 4, und somit einen Druck auf die Kathodenschicht 8. Die Kathodenschicht 8 ist aus reinem Lithium-Nickeldioxid hergestellt.

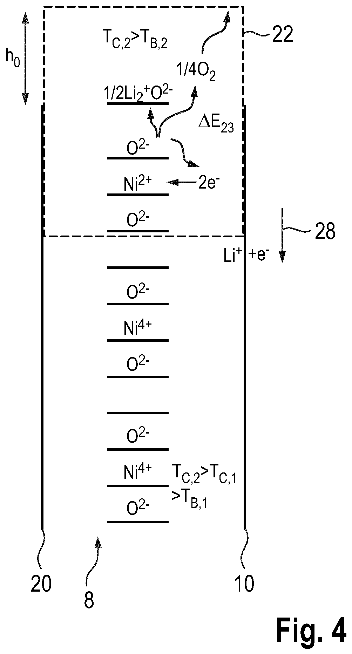

Nachfolgend ist ein erfindungsgemäßes Verfahren zum Betrieb der Batterie 2 anhand der Figuren 2 bis 6 näher erläutert. Die Figuren 2 bis 6 zeigen die Prozesse innerhalb der Kathodenschicht 8 während des Verfahrens, wobei die Darstellungen schematisiert und vereinfacht sind, und einen extremen Fall für die Phasenübergänge darstellt. Anhand der Figuren 2 bis 4 sind hierbei allgemein die Vorgänge beim Aufladen und Entladen der Batteriezelle 6 erläutert.

Die Fig. 2 zeigt die Kathodenschicht 8 mit einem benachbarten Stromableiter 20 aus Aluminium und der Anodenschicht 10 bei einer Ausgangs- oder Betriebstemperatur T_{A} von 25 °C. Die Separatorschicht 12 ist nicht gezeigt.

Die Kathodenschicht 8 ist als eine vereinfachte atomistische Kristallstruktur gezeigt, bei welchem die horizontalen Linien der Kathodenschicht 8 unterschiedlichen einzelnen Schichten der schichtartigen Kristallstruktur, also einer räumlichen Position der Elemente relativ zur Oberfläche, entsprechen. In reinem Lithium-Nickeldioxid weist Lithium eine einfach positive Ladung (Li⁺) und Nickel eine dreifach positive Ladung (Ni³⁺) sowie Sauerstoff eine zweifach negative Ladung (O₂²⁻) auf. Die Schichtposition sind in Fig. 2 mit den jeweiligen chemischen Zeichen versehen. Die oberen oder höheren Schichten befinden sich im Bereich einer Kathodenoberfläche 22 wobei mit zunehmender Tiefe oder Entfernung zu Oberfläche die unteren oder tieferen Schichten die Werte im Volumen oder Bulk 24 der Kathodenschicht 8 annehmen.

In der Fig. 2 befindet sich die Batterie 2 beziehungsweise die Batteriezelle 6 auf einem niedrigen Ladungszustand, und wird mit elektrischer Energie auf einen vorgegebenen oder hinterlegten Ladungszustand, vorzugsweise auf 20%, geladen. Dies bedeutet, dass der Batterie 2 elektrische Energie E₀ beispielsweise aus einem elektrischen Generator zugeführt wird. Als chemische Reaktion ausgedrückt: ${Li}^{+} {Ni}^{3 +} {O}_{2}^{2 -} {\to }^{{E}_{0}} {Ni}^{4 +} {O}_{2}^{2 -} + \left({Li}^{+}+{e}^{-}\right) + Δ {E}_{12}$

Im Zuge des Ladevorgangs (Delithiierung) wird ein Elektron e⁻ des Nickels abgegeben, so dass Nickel vierfach positiv geladen ist (Ni⁴⁺). Das Elektron e⁻ bindet sich mit dem Lithium an der Oberfläche, wobei eine Wärmeenergie ΔE₁₂ aufgrund ohmscher Dissipationswärme auftritt.

Unterhalb der unteren gestrichelten Linie der Oberfläche 22 bindet sich das Elektron e⁻ nicht direkt mit Li⁺ an der Oberfläche, sondern fließt durch die elektrische Leitung und reduziert Li⁺ (d.h. bindet sich mit Li⁺) erst bei der Anodenschicht 10. Oberhalb der gestrichelten Linie bleiben die Lithiumionen Li⁺ und Elektroden e⁻ in der Kathodenschicht 8.

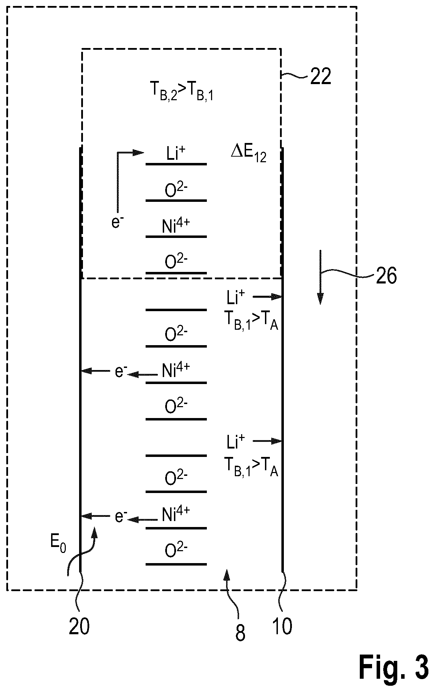

Der resultierende Wärmefluss 26 von der Kathodenoberfläche 22 auf die Bulkstruktur ist in der Fig. 3 mittels eines Pfeils dargestellt. Dadurch weist die Kathodenschicht 8 eine erhöhte Temperatur T_{B} auf, wobei die Temperatur an der Oberfläche T_{B,2} größer ist als die Temperatur T_{B,1} im Bulk 24. Der in Fig. 3 dargestellte Prozess ist vorwiegend bei hohem Oberflächenanteil, also bei kleinen Aktivpartikeln für die Alterung entscheidend.

Anschließend tritt in der Kathodenschicht 8 ein adiabatischer oder isothermer (je nach Kühlleistung) Phasenübergang auf, welcher zu einer Wärmeerzeugung ΔE₂₃ aufgrund einer exothermen Phasen- und Gasbildung führt: ${Ni}^{4 +} {O}_{2}^{2 -} + \left({Li}^{+}+{e}^{-}\right) + Δ {E}_{12} \to {Ni}^{2 +} {O}^{2 -} + \frac{1}{2} {Li}_{2}^{+} {O}^{2 -} + \frac{1}{4} {O}_{2} + Δ {E}_{23}$

Im Zuge des Phasenübergangs bildet sich an der Kathodenoberfläche 22 NiO und Li₂Osowie molekularer Sauerstoff O₂, welcher als Gas austritt.

Die Wärmeerzeugung ΔE₂₃ bewirkt eine erhöhte Temperatur T_{C,2} der Kathodenoberfläche 22, und eine erhöhte Temperatur T_{C,1} im Bulk 24. Die Temperatur T_{C,2} ist größer als die Temperatur T_{B,2}, wobei die Temperatur T_{C,1} größer als die Temperatur T_{B,1} ist, und wobei die Temperatur T_{C,2} größer als die Temperatur T_{C,1} ist. Somit ergibt sich ein resultierender Wärmefluss 28 von Oberfläche zu Bulk. Über die Wärmeerzeugung ΔE₂₃ wird dem Sauerstoff eine (Austritts-)Enthalpie h₀ zugeführt, so dass der sich bildende molekulare Sauerstoff (O₂) an der Kathodenoberfläche 22 austreten kann.

Dies bedeutet, dass während des Ladevorgangs Sauerstoff (O) reduziert wird, wodurch es zu einer Gasbildung von molekularem Sauerstoff (O₂) sowie zur Bildung von Lithium-Oxiden mit der Zusammensetzung Li₂Okommt. Nur ein Teil der Lithium-Ionen gelangt zusammen mit den Elektronen (e⁻) aus den Übergangsmetallen (Ni³⁺ auf Ni⁴⁺) in die Anode 10 bei hohen C-Raten, während manche Lithium-Ionen und Elektronen die Kathodenschicht 8 nicht rechtzeitig verlassen, sodass sich Lithium-Metall an Oberflächen und Grenzflächen bildet. Die Kathodenschicht 8 wird durch die erzeugte ohmsche Dissipationswärme ΔE₁₂ bei der Bildung von Lithium-Metall erwärmt. An der Kathodenoberfläche 22 binden sich bilden stabile Li₂O-Oberflächen, während andere Sauerstoff-Atome (O) zur Gasbildung beitragen.

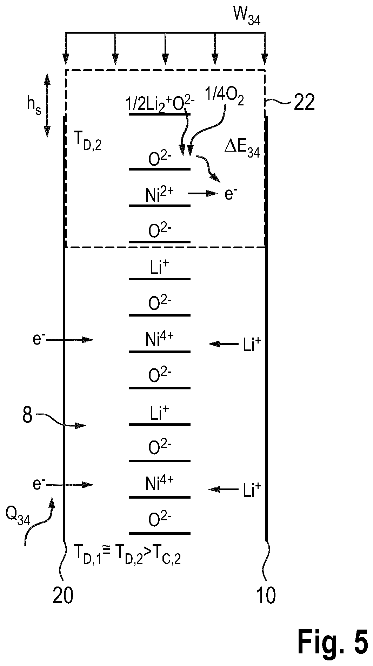

Erfindungsgemäß wird in dem in Fig. 5 gezeigten Verfahrensschritt der hydraulische Druck auf die Kathodenschicht 8 für eine vorgegebene Zeitdauer erhöht. Beispielsweise wird ein hydrostatischer oder aerostatischer Überdruck im Batteriegehäuse 4 erzeugt, welcher als eine Druckspannung W₃₄ auf die Kathodenschicht 8 einwirkt, welcher die Regenerationsprozesse an der Kathodenoberfläche 22 unterstützen: ${Ni}^{2 +} {O}^{2 -} + \frac{1}{2} {Li}_{2}^{+} {O}^{2 -} + \frac{1}{4} {O}_{2} + Δ {E}_{23} {\to }^{+ {W}_{34} + {Q}_{34}} {Li}^{+} {Ni}^{3 +} {O}_{2}^{2 -} + Δ {E}_{34}$

Die Kathodenschicht 8 wird hierbei erwärmt, dies bedeutet, dass eine Wärmezufuhr Q₃₄ stattfindet. Beispielsweise wird eine ohmsche Wärmeerzeugung zur Erwärmung oder Wärmezufuhr Q₃₄ verwendet. Hierzu wird eine Lithiierung durch eine leere Batterieentladung ohne äußere elektrische Arbeit durchgeführt. Durch die dadurch erhöhten Temperaturen T_{D,1} im Volumen der Kathodenschicht 8 und der erhöhten Temperatur T_{D,2} der Kathodenoberfläche 22 werden die Regenerationsprozesse beschleunigt. Zudem werden Bulk-Phasenübergänge bei geringerem Ladezustand verringert, da LiₓNiO₂ mit steigendem x stabiler werden. Die Temperaturen T_{D,1} und T_{D,2} sind etwa gleich groß, und größer als die Temperatur T_{C,2}.

Die Wärmezufuhr Q₃₄ ist vorzugsweise so dimensioniert, dass die Temperaturen T_{D,1} und T_{D,2} etwa 60 °C betragen. In einer geeigneten Dimensionierung ist die Druckspannung W₃₄ maximal 10 bar.

Durch die Druckspannung W₃₄ wird eine freie Enthalpie hₛ der Stoffe aus der Alterungsreaktion erhöht, so dass der gasförmige Sauerstoff (O₂) wieder in das Kathodenmaterial eintreten kann.

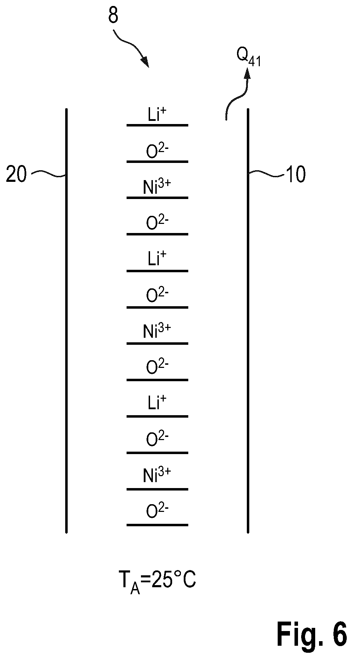

Abschließend, also nach der Zeitdauer beziehungsweise am Ende des Verfahrens, wird die Druckspannung W₃₄ auf den ursprünglichen Wert reduziert und die Kathodenschicht 8 auf die Anfangstemperatur T_{A} von beispielsweise 25 °C gekühlt (Fig. 6), wodurch die ursprüngliche Lithium-Nickeldioxid-Schicht regeneriert wird: ${Li}^{+} {Ni}^{3 +} {O}_{2}^{2 -} + Δ {E}_{34} {\to }^{- {Q}_{41}} {Li}^{+} {Ni}^{3 +} {O}_{2}^{2 -}$

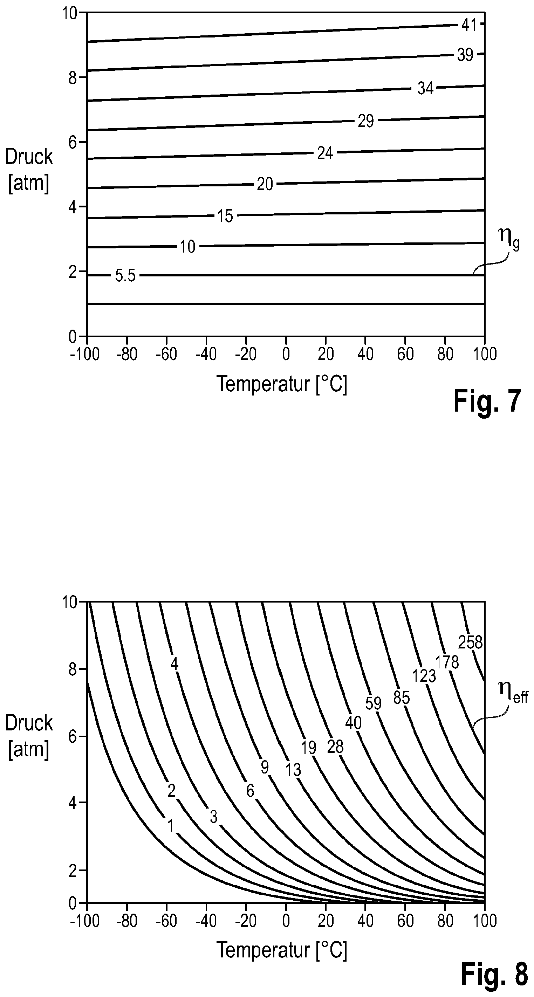

Die Umkehrbarkeit der Alterungsmechanismen hängt im Wesentlichen von der Stoßfrequenz von Sauerstoffmolekülen auf den LNO-Partikeloberfläche und von der Rate der chemischen Regenerierungsprozesse ab. Dies ist nachfolgend anhand der Fig. 7 und Fig. 8 näher erläutert.

Für ein ideales Gas lautet die Zustandsgleichung: $pV = {Nk}_{B} T$ wobei p der Druck, V das Volumen, N die Teilchenzahl, T die Temperatur und k_{B} die Boltzmannkonstante ist. Hierbei ergibt sich eine mittlere Geschwindigkeit c der Gasmoleküle in einer Raumrichtung zu: $c = \sqrt{\frac{{k}_{B} T}{m}}$ wobei m die Masse der Gasmoleküle ist. Hieraus folg eine mittlere Stoßfrequenz v von Sauerstoffmolekülen pro Flächeneinheit *A* der LNO-Kathodenoberfläche: $ν = \frac{Nc}{hA} = \frac{Nc}{V} = \frac{p}{\sqrt{{mk}_{B} T}}$

Das Verhältnis der Stoßfrequenz bei einer Temperatur T und bei einem Druck p zur Stoßfrequenz bei Standardbedingungen (*T*₀ = 25 °*C* = 298.15 *K, p*₀ *=* 1 *atm*) ist nachfolgend als kinetischer Gaswirkungsgrad η_{g} bezeichnet: ${η}_{g} ≅ \frac{ν}{{ν}_{0}} = \frac{p}{{p}_{0}} \sqrt{\frac{{T}_{0}}{T}} = \frac{p}{1 atm} \sqrt{\frac{298.15 K}{T}}$

Die Fig. 7 zeigt ein Temperatur-Druck-Diagramm für den kinetischen Gaswirkungsgrad η_{g} im Druckbereich von 1 atm bis 10 atm (physikalische Atmosphäre) und im Temperaturbereich von - 100 °C bis 100 °C.

Die Reaktionsrate Γ kann durch eine Arrhenius-Gleichung angenähert werden, da die Aktivierungsenergie E aufgrund der Festkörper Li_{1-δ} Ni_{1+δ} and Li₂Ohoch genug ist: $Γ ≅ A exp \left(-\frac{E}{{k}_{B} T}\right)$

Das Verhältnis der Reaktionsgeschwindigkeit in Bezug auf Standardbedingungen ergibt sich als: ${η}_{r} ≅ \frac{Γ}{{Γ}_{0}} ≅ exp \left[-\frac{E}{{k}_{B}}\left(\frac{1}{T}-\frac{1}{{T}_{0}}\right)\right]$

Der effektive Wirkungsgrad oder Rate der Reaktionen ist somit: ${η}_{eff} = {η}_{g} {η}_{r} = \frac{p}{{p}_{0}} \sqrt{\frac{{T}_{0}}{T}} exp \left[-\frac{E}{{k}_{B}}\left(\frac{1}{T}-\frac{1}{{T}_{0}}\right)\right]$

Die Fig. 7 zeigt ein Temperatur-Druck-Diagramm für gesamten Reaktionswirkungsgrad N_{eff} i im Druckbereich von 1 Amt bis 10 atm und im Temperaturbereich von -100 °C bis 100 °C für eine Aktivierungsenergie von 100 kJ/mol (Kilojoule pro Mol).

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Batterie
- 4: Batteriegehäuse
- 6: Batteriezelle
- 8: Kathodenschicht
- 10: Anodenschicht
- 12: Separatorschicht
- 14: Druckeinrichtung
- 16: Beutel
- 18: Ventil
- 20: Stromableiter
- 22: Kathodenoberfläche
- 24: Bulk
- 26: Wärmefluss
- 28: Wärmefluss

## Patentansprüche

1. Verfahren zum Betrieb einer elektrochemischen Batterie (2), wobei die Batterie (2) ein Batteriegehäuse (4), mindestens eine darin aufgenommene Batteriezelle (6) mit mindestens einer Kathodenschicht (8) mit reinem Lithium-Nickeldioxid als Aktivmaterial, und eine Druckeinrichtung (14) aufweist, mittels welcher zumindest zeitweise ein erhöhter Druck auf die Kathodenschicht (8) bewirkbar ist,- wobei die Batterie (2) in einem Ladevorgang mit elektrischer Energie auf einen vorgegebenen Ladezustand geladen oder entladen wird,
- wobei nach dem Ladevorgang für eine Zeitdauer mittels der Druckeinrichtung (14) ein erhöhter Druck auf die Kathodenschicht (8) erzeugt wird, und
- wobei nach der Zeitdauer der Druck auf einen Normaldruck reduziert wird.

2. Verfahren nach Anspruch 1,
**dadurch gekennzeichnet,**
**dass** die Batterie (2) auf einen Ladezustand zwischen 30% und 15%, insbesondere zwischen 30% und 20%, vorzugsweise auf 20%, geladen oder entladen wird.

3. Verfahren nach Anspruch 1 oder 2,
**dadurch gekennzeichnet,**
**dass** die Kathodenschicht (2) während der Zeitdauer erwärmt wird.

4. Verfahren nach Anspruch 3,
**dadurch gekennzeichnet,**
**dass** die Kathodenschicht (8) während der Zeitdauer auf eine Temperatur zwischen 50 °C und 70 °C, insbesondere zwischen 55 °C und 65 °C, vorzugsweise auf 60 °C, erwärmt wird.

5. Verfahren nach Anspruch 3 oder 4,
**dadurch gekennzeichnet,**
**dass** die Erwärmung mittels einer Batterieentladung ohne elektrische Arbeit bewirkt wird.

6. Verfahren nach einem der Ansprüche 1 bis 5,
**dadurch gekennzeichnet,**
**dass** der Druck während der Zeitdauer auf maximal 25 bar, insbesondere auf 5 bar bis 10 bar, erhöht wird.

7. Verfahren nach einem der Ansprüche 1 bis 6,
**dadurch gekennzeichnet,**
**dass** die Druckeinrichtung (14) zur Druckerhöhung mit einer externen Fördereinrichtung gekoppelt wird, welche im Betrieb ein Fluid in das Batteriegehäuse fördert.

## Claims

1. Method for operating an electrochemical battery (2), wherein the battery (2) comprises a battery housing (4), at least one battery cell (6) which is accommodated in the battery housing and has at least one cathode layer (8) containing pure lithium nickel dioxide as the active material, and a pressure device (14), by means of which an increased pressure can be at least temporarily applied to the cathode layer (8), - wherein the battery (2) is charged or discharged with electrical energy to a specified state of charge in a charging process,
- wherein an increased pressure is generated on the cathode layer (8) by means of the pressure device (14) for a period of time after the charging process, and
- wherein the pressure is reduced to a normal pressure after the period of time.

2. Method according to Claim 1,
**characterized**
**in that** the battery (2) is charged or discharged to a state of charge of between 30% and 15%, in particular between 30% and 20%, preferably to 20%.

3. Method according to Claim 1 or 2,
**characterized**
**in that** the cathode layer (2) is heated during the period of time.

4. Method according to Claim 3,
**characterized**
**in that** the cathode layer (8) is heated to a temperature of between 50°C and 70°C, in particular between 55°C and 65°C, preferably to 60°C, during the period of time.

5. Method according to Claim 3 or 4,
**characterized**
**in that** the heating is effected by means of battery discharge without electrical work.

6. Method according to any of Claims 1 to 5,
**characterized**
**in that** the pressure is increased to a maximum of 25 bar, in particular to 5 bar to 10 bar, during the period of time.

7. Method according to any of Claims 1 to 6,
**characterized**
**in that** the pressure device (14) for increasing pressure is coupled to an external conveyor device which conveys a fluid into the battery housing during operation.

## Revendications

1. Procédé permettant d'exploiter une batterie électrochimique (2), dans lequel la batterie (2) présente un boîtier de batterie (4), au moins une cellule de batterie (6) logée dans celui-ci, munie d'une couche cathodique (8) comprenant du dioxyde de lithium et de nickel comme matière active, et un dispositif de pression (14) qui permet d'obtenir au moins temporairement une pression accrue sur la couche cathodique (8), - dans lequel la batterie (2) est chargée ou déchargée avec de l'énergie électrique dans un processus de charge jusqu'à un état de charge prédéfini,
- dans lequel, après le processus de charge, une pression accrue sur la couche cathodique (8) est produite pendant une période de temps au moyen du dispositif de pression (14), et
- dans lequel, après la période de temps, la pression est réduite à une pression normale.

2. Procédé selon la revendication 1,
**caractérisé**
**en ce que** la batterie (2) est chargée ou déchargée jusqu'à un état de charge compris entre 30 % et 15 %, en particulier entre 30 % et 20 %, de préférence à 20 %.

3. Procédé selon la revendication 1 ou 2,
**caractérisé**
**en ce que** la couche cathodique (2) est chauffée pendant la période de temps.

4. Procédé selon la revendication 3,
**caractérisé**
**en ce que** pendant la période de temps, la couche cathodique (8) est chauffée jusqu'à une température comprise entre 50 °C et 70 °C, en particulier entre 55 °C et 65 °C, de préférence à 60 °C.

5. Procédé selon la revendication 3 ou 4,
**caractérisé**
**en ce que** le chauffage est provoqué au moyen d'une décharge de batterie sans travail électrique.

6. Procédé selon l'une quelconque des revendications 1 à 5,
**caractérisé**
**en ce que** pendant la période de temps, la pression est augmentée à un maximum de 25 bar, en particulier de 5 bar à 10 bar.

7. Procédé selon l'une quelconque des revendications 1 à 6,
**caractérisé**
**en ce que** pour l'augmentation de la pression, le dispositif de pression (14) est couplé à un dispositif de transport externe qui, en cours de fonctionnement, transporte un fluide dans le boîtier de batterie.
